# EUROPEAN PATENT SPECIFICATION

(11) **EP 3 073 877 B1**
(45) Date of publication and mention of the grant of the patent: **01.11.2017**
(21) Application number: 14800065.6
(22) Date of filing: 20.11.2014
(51) Int. Cl.: A47J 31/60

(54) **FILTER CARTRIDGE FOR A MACHINE FOR PREPARING BEVERAGES**
FILTERPATRONE FÜR EINEN GETRÄNKEZUBEREITUNGSAUTOMATEN
CARTOUCHE DE FILTRE POUR MACHINE DE PRÉPARATION DE BOISSONS

(30) Priority: 28.11.2013 IT PD20130326
(43) Date of publication of application: 05.10.2016
(73) Proprietor: Laica S.p.A., 36021 Barbarano Vicentino (VI) (IT)
(72) Inventor: MORETTO, Maurizio, 36100 Vicenza (IT)
(74) Representative: Locas, Davide
(86) International application number: PCT/EP2014/075130
(87) International publication number: WO 2015/078762

(56) References cited:
- US-A1- 2008 121 581
- US-A1- 2009 283 467

## Description

The invention relates to a filter cartridge for a machine for beverage preparation of the type suitable for placing in a reservoir connected to the feed circuit of a machine for processing the water within it.

In the context of the reference technical sector the use of machines for preparing coffee and hot drinks in general provided with a reservoir intended to contain the water required for preparation of the beverage is known. The presence of such a reservoir is typically required in machines for domestic use to avoid attaching the machine to the water supply network and at the same time to ensure a sufficient quantity of water to obtain a suitable number of cups of coffee.

In order to improve the quality of the water present in the reservoir, for example eliminating impurities present in it or softening it, the use of replaceable cartridge filtration systems such as that described for example in European patent EP 1 340 442 in coffee machines is known.

It has however been observed that excessive softening of the water used in the preparation of coffee can have an adverse effect on its quality, in that although on the one hand impurities which it is not desirable to have present in the beverage are removed, on the other hand excessive filtration can result in excessive impoverishment of the water in terms of salts and other substances whose presence is instead desirable.

As a consequence systems which can be used to regulate the level of filtration performed in the cartridge, which is higher the greater the hardness of the water used, have been developed.

This solution is for example described in European patent EP 1 802 224 which relates to a cartridge filter having an inlet chamber and an outlet chamber, both provided with filter material, which are in communication with each other in an upper region of the filter.

The water inlet and outlet of the filter are both located in the lower part of the cartridge and as a consequence a U-shaped path is defined for the liquid within the filter.

In addition to this the outlet is also connected to the inlet region of the filter by means of a bypass located in a lower portion of one of the two chambers and this allows some unfiltered liquid to flow directly towards the outlet of the cartridge without therefore passing along the filtration path described above.

As a consequence a quantity of filtered water and a quantity of unfiltered water are mixed at the outlet from the cartridge, thus making it possible to limit impoverishment of the water, in particular in terms of salts.

The quantity of water passing via the bypass mainly depends on the dimensions of the opening provided for the passage of liquid, and in order to control that quantity, and consequently also the level of filtration of the water for the reasons described above, the use of several bypass openings associated with a rotating cap which can close one or more openings is provided, again in patent EP 1 802 224.

This solution has not however proved to be optimal from the functional point of view or the practical point of view.

In fact it should be understood that on average users pay little attention to the preparatory operations which have to be performed on such filter cartridges before use, and it is therefore with difficulty that they are led to make the adjustment through an action that requires some level of attention.

Furthermore it may easily happen that during the normal maintenance of coffee machines, for example in order to clean out the reservoir, the position of the cap is accidentally changed, thus obviating the adjustment initially made.

In addition to this it is difficult to make a sufficiently accurate connection between the cap and the body of the cartridge to ensure that the bypasses are effectively closed when the characteristics of the unfiltered water require maximum filtration.

It should in fact be understood that the construction of an accurate closure, possibly associated with suitable sealing means, would be excessively costly for such applications, where containing production costs is one of the major priorities.

The technical problem underlying this invention is that of providing a filter cartridge for machines for coffee preparation which is structurally and functionally designed to overcome the disadvantages mentioned with reference to the cited known art.

This problem has been overcome through a cartridge filter for machines for the preparation of coffee and hot or cold beverages in general constructed in accordance with claim 1.

Preferred characteristics of the invention are defined in the dependent claims.

The arrangement according to this invention makes it possible to control the bypass flow easily, thereby making it possible to achieve optimum control of filtration in relation to the characteristics of the water that has to be filtered.

Furthermore, through the cartridge according to this invention it is possible to provide effective closure of the bypass when required, thus making full and effective use of the filter material.

In addition to this, the risk of changing the adjustment of the bypass accidentally or in any event in an undesired way after it has been adjusted when the cartridge is first used is minimised, if not ruled out.

Finally the solution proposed has proved to be particularly economical, having virtually no effects on the costs of producing the cartridge. Characteristics and further advantages of the invention will be more apparent from the following detailed description of a preferred but not exclusive embodiment illustrated by way of indication and without limitation, with reference to the appended drawings in which:
- Figures 1 and 1A show a diagrammatical view in lateral cross-section and a corresponding detail of a reservoir for a coffee machine comprising a filter cartridge according to this invention;
- Figures 2A and 2B show two perspective views in partial cross-section of the reservoir and cartridge in Figure 1, in which closure means intended to close auxiliary openings for the delivery of water into the cartridge are positioned to close off the openings and removed respectively;
- Figures 3 and 3A show a diagrammatical view in lateral cross-section and a corresponding detail of a reservoir for coffee machines comprising a filter cartridge according to a first embodiment of this invention;

- Figures 4 and 4A show a diagrammatical view in lateral cross-section and a corresponding detail of a reservoir for coffee machines comprising a filter cartridge according to a second embodiment of this invention;
- Figures figure 5 and 5A show a diagrammatical view in lateral cross-section and a corresponding detail of a reservoir for a coffee machine comprising a filter cartridge according to a third embodiment of this invention;
- Figures 6 and 6A show a diagrammatical view in lateral cross-section and a corresponding detail of a reservoir for a coffee machine comprising a filter cartridge according to a fourth embodiment of this invention; and
- Figures 7 and 7A show a diagrammatical view according to a lateral cross-section and a corresponding detail of a reservoir for a coffee machine comprising a filter cartridge according to a fifth embodiment of this invention.

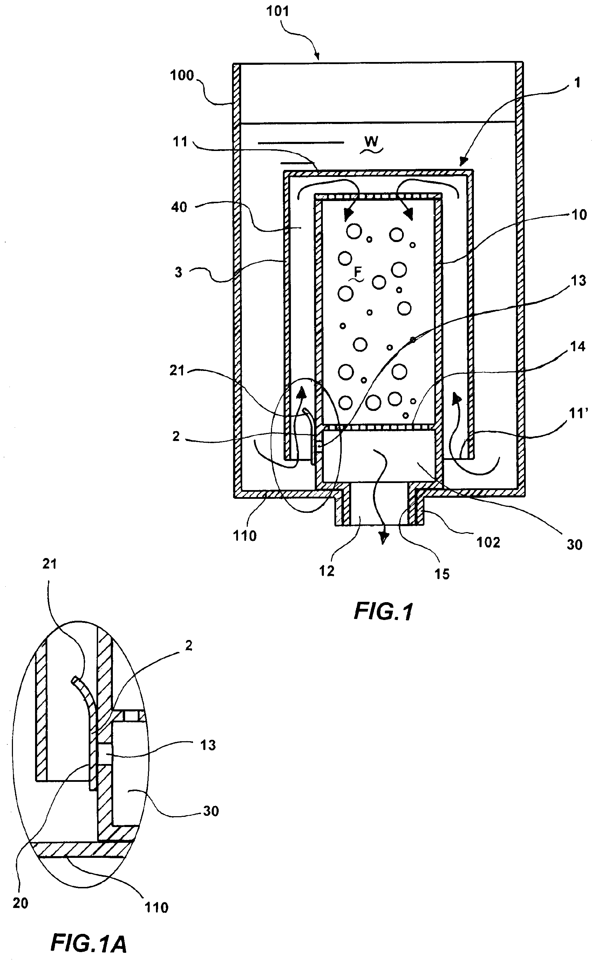

With reference initially to Figure 1, a filter cartridge for machines for the preparation of beverages, such as for example coffee, tea or a barley coffee, is indicated as a whole by reference number 1.

Filter cartridge 1 is of the type designed to be fitted into a reservoir 100 intended to contain water W which is to be used for preparation of the beverage.

By way of example, reservoir 100 may comprise a cylindrical structure, defined by a perimeter wall, in the upper portion of which there is an inlet 101 for pouring water into the reservoir. It is however obvious that the reservoir may be provided with alternative shapes.

Again with reference to Figure 1, the connection of reservoir 100 to the coffee machine, which is not illustrated in the figure, in particular to the water supply circuit within it, is provided through a connecting element 102 constructed in the bottom wall 110 of reservoir 1. By way of example, connecting element 102 may be in the form of a nozzle inserted into a corresponding seat, not illustrated in the figure, constructed in the machine and connected to its circuit.

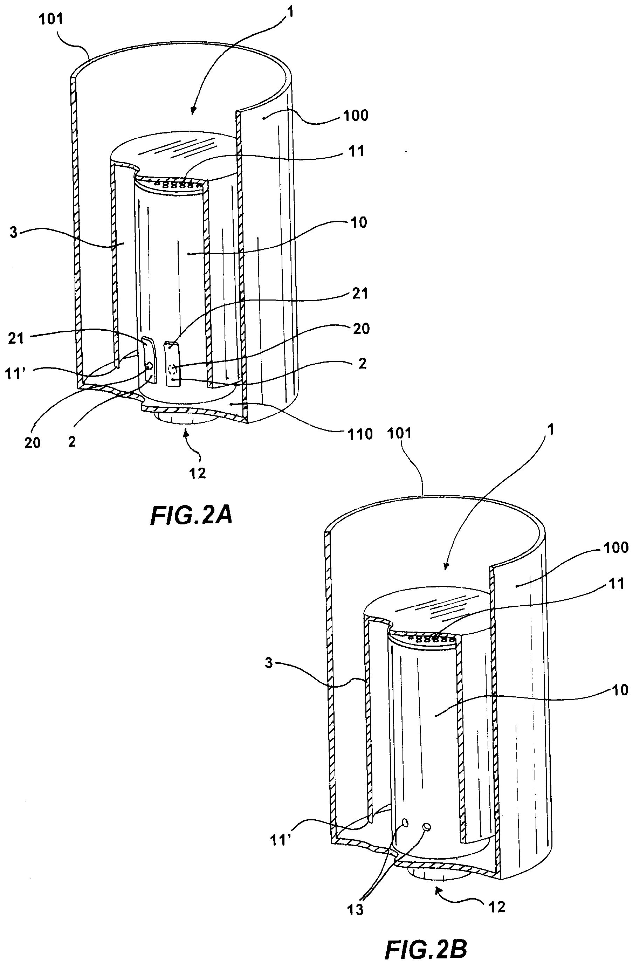

Filter cartridge 1 comprises a main body 10, preferably of elongated shape, within which is housed filter material F, such as for example ion exchange resins. With reference also to Figure 2A, filter material F is contained with main body 10 by means of a perforated surface 11, for example in the form of a net filter which makes it possible to hold back filter material F, which is typically in powder form, while at the same time allowing water to pass through. In this way perforated surface 11 forms an inlet to main body 10 through which the water which has to be filtered is delivered to filter material F. At an opposite extremity of main body 10 in relation to inlet 11 there is a further perforated surface 14, also indicated below as outlet perforated surface 14, which is also capable of holding back filter material F while at the same time allowing water to pass through. In this way the filtration chamber within which filter material F is housed is formed by the two perforated surfaces 11 and 14.

Preferably a collection chamber 30 through which the water leaving the filtration chamber flows towards outlet 12 of the cartridge is present at the outlet from outlet perforated surface 14.

Again according to a preferred embodiment, outlet 12 is in the form of a connecting collar 15 which can be coupled to connecting element 102 of reservoir 100 in such a way that only water which has passed through filter cartridge 1 can be supplied to the machine's feed circuit. In any event, and more generally, outlet 12 can be associated with the feed circuit in such a way that the water leaving it is provided to the machine for the purposes of preparing the beverage.

It is therefore obvious that it would be desirable for the water provided through outlet 12 to have optimum characteristics for the preparation of coffee or for any other use for which the machine is intended, in terms of level of filtration.

In accordance with a preferred embodiment, main body 10 is associated with an outer enclosure 3 connected to it in such a way as to form an inlet channel 40, through which the water is caused to flow towards inlet 11 of main body 10. Also, preferably, outer enclosure 3 extends to cover main body 10 in such a way as to form an inlet section 11' located close to the bottom wall 110 of reservoir 100.

It will be noted that outer enclosure 3 may be associated with main body 10 either stably or in a removable way. In the latter case a particularly advantageous solution is achieved in that at least part of cartridge 1 can be reused. It is also obvious that connection between enclosure 3 and main body 10 may also for example take place through a series of radial extensions, not illustrated in the figure, which connect the two components without impeding the passage of water.

As a result of a suction force provided by the feed circuit of the machine, water is then drawn within filter cartridge 1 from the bottom of reservoir 100 through inlet section 11' and rises through the cartridge, passing via channel 40 to finally enter main body 10 through inlet 11. The water then again rises towards outlet 12, passing through filter material F, until it is placed in the feed circuit through connecting element 102. A path for the passage of water within the cartridge between inlet section 11' and outlet 12 is defined in this way.

With reference therefore also to Figure 1A, the filter cartridge according to this invention further comprises at least one auxiliary opening 13 located in an intermediate position along the path of the liquid between inlet section 11' and/or inlet 11, and outlet 12.

As will be clearly understood from the figures, auxiliary opening 13 makes it possible to provide a bypass, allowing unfiltered water to be delivered into main body 10, preferably into collection chamber 30.

It is also obvious that auxiliary opening 13 may also be constructed in different positions, for example it may be opposite the filtration chamber, in the latter case being also provided with a perforated surface capable of retaining filter material F.

Also in the present embodiment, auxiliary opening 13 is located downstream from inlet section 11', but it may also have different locations. This position downstream from the inlet section nevertheless makes it possible to guarantee that the bypass will function until the reservoir is completely emptied, or until the level of water is below inlet section 11'. Filter cartridge 1 according to this invention also comprises closure means 2 of the removable type for auxiliary opening 13 which makes it possible to prevent the passage of water through it.

More specifically, in the present embodiment closure means 2 is constructed as a thin metal strip removably attached to the main body in such a way as to close off opening 13. Attachment may for example be provided by adhesive bonding, hot welding, ultrasonic bonding or by means of a nesting system.

In this way when it is necessary to use the bypass because of the characteristics of the unfiltered water used in the reservoir closure means 2 may be removed by the user, allowing unfiltered water to enter collection chamber 30.

Also, as may be seen from Figure 2B, in this embodiment there are two openings 13 which allow the quantity of unfiltered water delivered to be controlled on the basis of the number of openings 13 uncovered.

The type of attachment described above makes it possible to render closure means 2 non-reversible in that the adhesive or other systems used are no longer able to impart sufficient adhesion to the strip such as to again close off opening 13.

In this way, once the bypass has been adjusted by removing one or more strips, it will be no longer possible to restore corresponding opening 13 to the closed condition, apart from this being done in a manner of which the user is perfectly aware, for example by refreshing the adhesive or inserting a plug element in opening 13.

This makes it absolutely certain that the bypass cannot be modified randomly or accidentally, above all in the course of maintenance operations on the reservoir of the coffee machine as a whole.

More generally, this capability may be accomplished by providing closure means which can be physically separated from main body 10, and/or in which an intentionally breakable area 20 is provided.

It will be noted that the strip described in this embodiment makes it possible to implement both of the aforesaid characteristics.

In fact, as illustrated above, it may be removed completely, being therefore physically separate from the main body, or it may be partly torn off, breaking the adhesive layer provided by the adhesive or other similar systems, thus defining an area where closure means 2 can be intentionally broken. In both cases it is not possible to restore the closure to opening 13 except by the use of further means.

In order to make it easier to tear off strip 2, a grippable portion 21, which projects from main body 10 and can therefore be easily gripped in order to tear off strip 2 may be provided.

Furthermore a strip of a material and thickness which can be perforated by means of a sharp object, such as for example, a pencil, in intentionally breakable area 20 illustrated in Figure 2A corresponding to opening 13 may advantageously be provided. For this purpose the strip may be made using a thin aluminium foil, adhesive-bonded to the main body.

According to a preferred embodiment, the closure means 2 further comprises a graphic element, such as a circle or a circonference, for visually indicating the position of the area 20, as this can cover the opening 13.

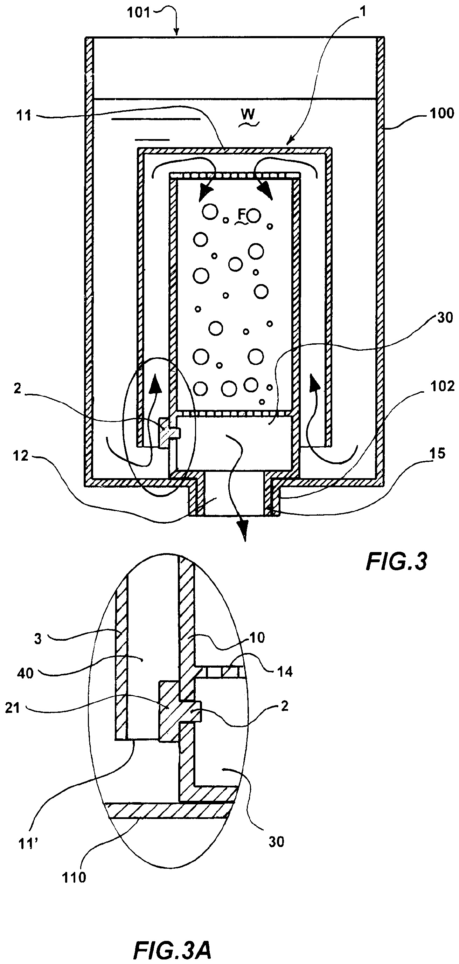

In any event it is obvious that other solutions capable of providing closure means which are physically separable from main body 10 and/or intentionally breakable area 20 may be provided, and some of these are illustrated below with reference to Figures 3 to 7.

Figures 3 and 3A illustrate a first variant embodiment in which closure means 2 is constructed as a plug element fitted within opening 13.

In order to aid insertion and in any event to ensure the perfect seal for the plug element it may be made of a partly resilient material, thus providing some interference with opening 13.

In addition to this plug element 2 may have a wider portion 21 providing means for gripping it.

It is obvious that again in this case plug element 2 may be physically separate from the main body, thus avoiding any risk of accidental reclosure of the bypass.

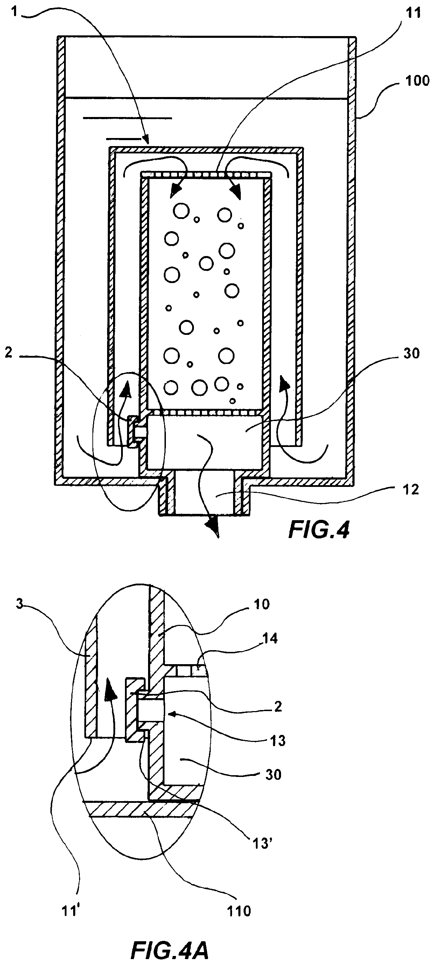

A variant of the construction of the plug element is described in Figures 4 and 4A, in which opening 13 is provided with a projecting portion 13' to which plug element 2 may be attached.

In this case, therefore, contrary to the preceding embodiment, plug element 2 represents the female element in the coupling with opening 13.

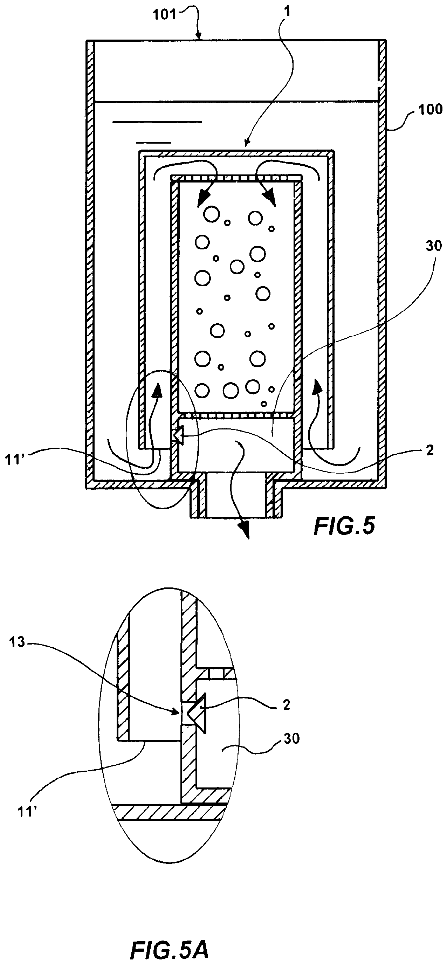

A further variant construction is illustrated in Figures 5 and 5A, in which plug element 2 is preferably of pyramidal shape and is fitted into opening 13 from the inside of collection chamber 30.

Plug element 2 may therefore be removed by pushing it from the outside with a sharp object. Not only will accidental reclosure of the closure means be avoided in this way, but so also will their removal because the plug element can only be reached using a tool.

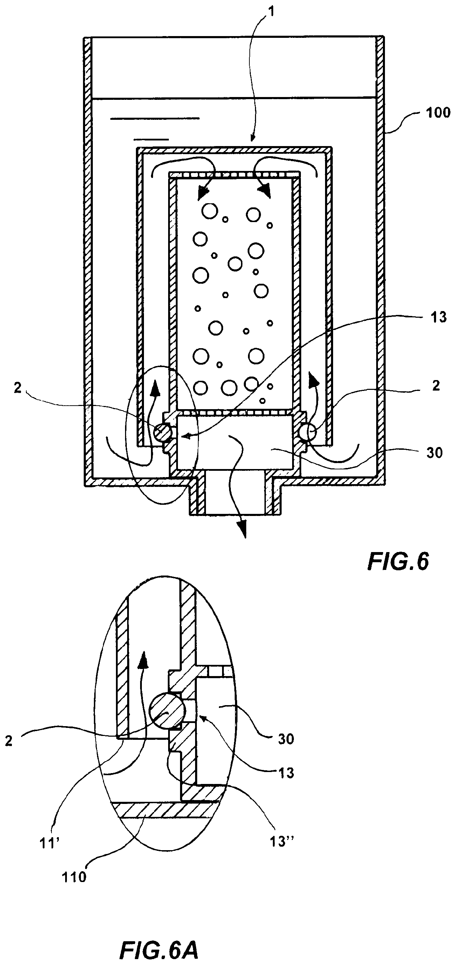

Figures 6 and 6A illustrate a variant embodiment in which closure means 2 is formed of a ring surrounding main body 10 at opening 13. This solution makes it possible to ensure the perfect seal for the closure through particularly simple and economical components.

In addition to this, when it is desired to reclose opening 13 ring 2 may be fitted without any particular difficulty, as this is an operation which does not require any particular accuracy.

Also, to encourage correct positioning of ring 2, main body 10 has abutting means 13", preferably formed by a pair of annular thicknesses located above and below opening 13 respectively at a distance such as to house ring 2 between them, correspondingly closing off the opening.

It is obvious that again in this case ring 2 can be physically separate from the main body, making it possible to provide the advantages illustrated with reference to preceding embodiments.

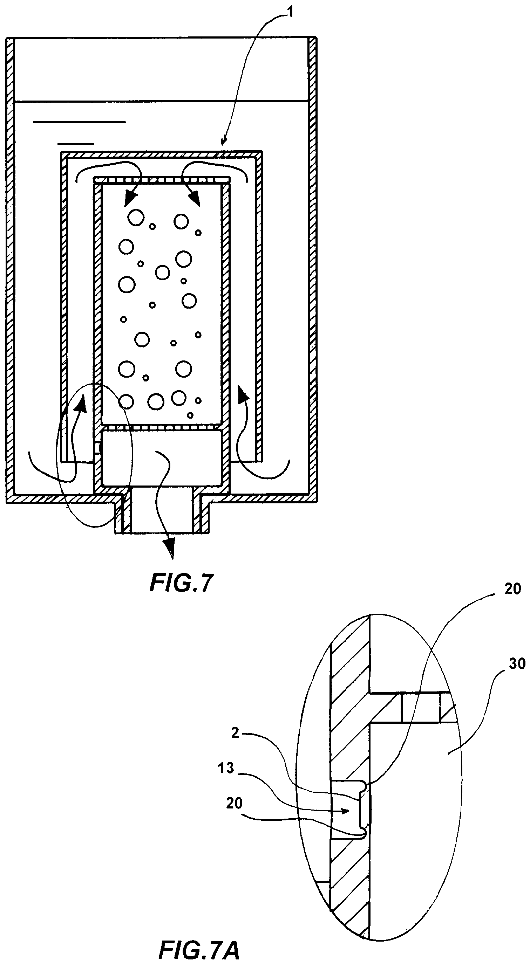

A further embodiment is described in Figures 7 and 7A, in which closure means 2 is formed as a single body with main body 10 and is defined by a thinning of its wall in which opening 13 is defined.

In other words, at opening 13 the wall of main body 10 is thinner, at least corresponding to an intentionally breakable area, such that separation of closure means 2 may be accomplished by pressing with a sharp object.

This embodiment has the advantage that it does not require any additional stages in the assembly of closure means 2, and the latter can be directly constructed by moulding together with main body 10 of cartridge 1.

The invention thus solves the problem stated, while at the same time offering a plurality of advantages. The use of closure means capable of being physically separated from the main body, or more generally from the cartridge, makes it possible to prevent it from being displaced when the cartridge is handled, for example for maintaining the coffee machine. In fact, once removed, the closure means is normally thrown away or placed in a position away from the cartridge and, as a consequence, is not immediately available to the user. Similar considerations may apply in the case where the closure means comprises an intentionally breakable area.

Also, when the outer enclosure is made removable with respect to the main body and at the same time the auxiliary opening is made downstream from the inlet section removal of the closure means is rendered simpler, in that it can be easily reached when the outer enclosure is removed.

At the same time the use of a removable outer enclosure makes it possible to use materials having high aesthetic qualities for the enclosure, even using materials which are not necessarily economical, as they do not have to be replaced at the end of the cartridge filter's useful life.

## Claims

1. A filter cartridge (1) for a machine for preparing beverages, comprising a main body (10) for housing filter material, the main body (10) comprising an inlet (11) for the introduction of liquid to be filtered, an outlet (12) for the outflow of filtered liquid, and an auxiliary opening (13), located in an intermediate position along a path along which the liquid passes between the inlet (11) and the outlet (12), and designed for the introduction of unfiltered liquid into the main body (10), the filter cartridge (1) further comprising closure means (2) for closing the auxiliary opening (13), **characterised in that** the closure means (2) can be physically separated from the main body and/or comprises an intentionally breakable area (20) in which it can be broken in order to open the auxiliary opening (13).

2. A filter cartridge (1) according to Claim 1, comprising a plurality of auxiliary openings (13) and respective closure means (2), the closure means (2) being individually physically separable from the main body (10) and/or individually breakable in the intentionally breakable area (20).

3. A filter cartridge (1) according to Claim 1 or 2, wherein the closure means (2) comprises grip means (21).

4. A filter cartridge (1) according to any one of the preceding claims, wherein the closure means (2) comprises a strip fixed to the main body (10) at the position of the auxiliary opening (13).

5. A filter cartridge (1) according to Claim 4 when dependent on Claim 3, wherein the strip is partially fixed to the main body (10) in such a way as to form the grip means (21).

6. A filter cartridge (1) according to any one of the preceding claims, further comprising an outer housing (3) coupled to the main body (10) in such a way as to form an inlet channel (40) for the liquid to be filtered.

7. A filter cartridge (1) according to Claim 6, wherein the outer housing (3) extends to cover the main body (10) in such a way as to form an inlet section (11') for the liquid to be filtered, positioned, in use, in the proximity of an end wall (110) of a reservoir (100) for containing the liquid that is to be filtered for use in the preparation of the beverage.

8. A filter cartridge (1) according to Claim 7, wherein the auxiliary opening (13) is formed downstream of the inlet section (11') and upstream of the inlet (11).

9. A filter cartridge (1) according to any one of Claims 6 to 8, wherein the outer housing (3) is associated in a removable manner with the main body (10).

10. A filter cartridge (1) according to any one of the preceding claims, wherein the closure means (2) is formed by a reduction in the thickness of a wall of the main body (10) at the position of the opening (13), such that the intentionally breakable area (20) is defined thereby.

11. A filter cartridge (1) according to any one of the preceding claims, wherein the closure means (2) comprises a plug element which can be fitted into the opening (13).

12. A filter cartridge (1) according to any one of the preceding claims, wherein the closure means (2) comprises a graphic element for visually indicating the position of the intentionally breakable area (20).

## Patentansprüche

1. Filterkartusche (1) für eine Maschine zur Aufbereitung von Getränken mit einem Hauptkörper (10) zum Aufnehmen eines Filtermaterials, wobei der Hauptkörper (10) einen Einlass (11) zur Einleitung von zu filternder Flüssigkeit und einen Auslass (12) zum Ablauf der gefilterten Flüssigkeit und eine zusätzliche Öffnung (13) aufweist, die an einer mittleren Position entlang eines Weges angeordnet ist, entlang dem die Flüssigkeit zwischen dem Einlass (11) und dem Auslass (12) hindurchgeht, und zur Einleitung von ungefilterter Flüssigkeit in den Hauptkörper (10) ausgebildet ist, wobei die Filterkartusche (1) ferner eine Schließeinrichtung (2) zum Schließen der zusätzlichen Öffnung (13) aufweist, **dadurch gekennzeichnet, dass** die Schließeinrichtung (2) physikalisch vom Hauptkörper getrennt werden kann und/oder eine vorsätzliche Sollbruchstelle (20) aufweist, an der sie gebrochen werden kann, um die zusätzliche Öffnung (13) zu öffnen.

2. Filterkartusche (1) gemäß Anspruch 1, die eine Mehrzahl von zusätzlichen Öffnungen (13) und jeweiligen Schließeinrichtungen (2) aufweist, wobei die Schließeinrichtungen (2) physikalisch einzeln vom Hauptkörper (10) trennbar und/oder einzeln an der vorsätzlichen Sollbruchstelle (20) brechbar sind.

3. Filterkartusche (1) gemäß Anspruch 1 oder 2, wobei die Schließeinrichtung (2) eine Greifeinrichtung (21) aufweist.

4. Filterkartusche (1) gemäß einem der vorhergehenden Ansprüche, wobei die Schließeinrichtung (2) ein Band aufweist, das am Hauptkörper (10) an der Position der zusätzlichen Öffnung (13) fixiert ist.

5. Filterkartusche (1) gemäß Anspruch 4, in Abhängigkeit von Anspruch 3, wobei das Band teilweise am Hauptkörper (10) derart fixiert ist, um die Greifeinrichtung (21) zu bilden.

6. Filterkartusche (1) gemäß einem der vorhergehenden Ansprüche, die ferner ein Außengehäuse (3) aufweist, das mit dem Hauptkörper (10) derart verbunden ist, um einen Einlasskanal (40) für die zu filternde Flüssigkeit zu bilden.

7. Filterkartusche (1) gemäß Anspruch 6, wobei sich das Außengehäuse (3) erstreckt, um den Hauptkörper (10) derart abzudecken, um einen Einlassabschnitt (11') für die zu filternde Flüssigkeit zu bilden, der bei Anwendung in der Umgebung einer Endwand (110) eines Vorratsbehälters (100) zum Aufnehmen der Flüssigkeit positioniert wird, die zur Anwendung bei der Aufbereitung des Getränks gefiltert werden soll.

8. Filterkartusche (1) gemäß Anspruch 7, wobei die zusätzliche Öffnung (13) stromabwärts des Einlassabschnitts (11') und stromaufwärts des Einlasses (11) ausgebildet ist.

9. Filterkartusche (1) gemäß einem der Ansprüche 6 bis 8, wobei das Außengehäuse (3) in entfernbarer Weise mit dem Hauptkörper (10) verbunden ist.

10. Filterkartusche (1) gemäß einem der vorhergehenden Ansprüche, wobei die Schließeinrichtung (2) durch eine Reduzierung der Dicke einer Wand des Hauptkörpers (10) an der Position der Öffnung (13) ausgebildet ist, so dass die vorsätzliche Sollbruchstelle (20) dadurch definiert wird.

11. Filterkartusche (100) gemäß einem der vorhergehenden Ansprüche, wobei die Schließeinrichtung (2) ein Stopfenelement aufweist, das in die Öffnung (13) eingepasst werden kann.

12. Filterkartusche (100) gemäß einem der vorhergehenden Ansprüche, wobei die Schließeinrichtung (2) ein graphisches Element zum visuellen Anzeigen der Position der vorsätzlichen Sollbruchstelle (20) aufweist.

## Revendications

1. Cartouche de filtre (1) pour machine de préparation de boissons, comprenant un corps principal (10) destiné à loger un matériau de filtre, le corps principal (10) comprenant un orifice d'entrée (11) pour l'introduction d'un liquide à filtrer, un orifice de sortie (12) pour l'écoulement du liquide filtré, et une ouverture auxiliaire (13), située dans un emplacement intermédiaire le long d'un trajet le long duquel le liquide passe entre l'orifice d'entrée (11) et l'orifice de sortie (12), et conçue pour l'introduction d'un liquide non filtré dans le corps principal (10), la cartouche de filtre (1) comprenant en outre des moyens de fermeture (2) pour fermer l'ouverture auxiliaire (13), **caractérisée en ce que** les moyens de fermeture (2) peuvent être séparés physiquement du corps principal et/ou comprennent une zone intentionnellement fracturable (20) dans laquelle ils peuvent être fracturés afin d'ouvrir l'ouverture auxiliaire (13).

2. Cartouche de filtre (1) selon la revendication 1, comprenant une pluralité d'ouvertures auxiliaires (13) et de moyens de fermeture respectifs (2), les moyens de fermeture (2) étant individuellement séparables physiquement du corps principal (10) et/ou individuellement fracturables dans la zone intentionnellement fracturable (20).

3. Cartouche de filtre (1) selon la revendication 1 ou 2, dans laquelle les moyens de fermeture (2) comprennent des moyens de préhension (21).

4. Cartouche de filtre (1) selon l'une quelconque des revendications précédentes, dans laquelle les moyens de fermeture (2) comprennent une bande fixée sur le corps principal (10) à l'emplacement de l'ouverture auxiliaire (13).

5. Cartouche de filtre (1) selon la revendication 4 lorsqu'elle dépend de la revendication 3, dans laquelle la bande est partiellement fixée sur le corps principal (10) de manière à former les moyens de préhension (21).

6. Cartouche de filtre (1) selon l'une quelconque des revendications précédentes, comprenant en outre un logement externe (3) couplé au corps principal (10) de manière à former un canal d'entrée (40) pour le liquide à filtrer.

7. Cartouche de filtre (1) selon la revendication 6, dans laquelle le logement externe (3) s'étend jusqu'à couvrir le corps principal (10) de manière à former une section d'entrée (11') pour le liquide à filtrer, placée, en service, à proximité d'une paroi d'extrémité (110) d'un réservoir (100) destiné à contenir le liquide qui est à filtrer pour être utilisé dans la préparation de la boisson.

8. Cartouche de filtre (1) selon la revendication 7, dans laquelle l'ouverture auxiliaire (13) est formée en aval de la section d'entrée (11') et en amont de l'orifice d'entrée (11).

9. Cartouche de filtre (1) selon l'une quelconque des revendications 6 à 8, dans laquelle le logement externe (3) est associé de manière amovible au corps principal (10).

10. Cartouche de filtre (1) selon l'une quelconque des revendications précédentes, dans laquelle les moyens de fermeture (2) sont formés par une diminution de l'épaisseur d'une paroi du corps principal (10) à l'emplacement de l'ouverture (13), de sorte que la zone intentionnellement fracturable (20) est définie par ceux-ci.

11. Cartouche de filtre (1) selon l'une quelconque des revendications précédentes, dans laquelle les moyens de fermeture (2) comprennent un élément formant bouchon qui peut être introduit dans l'ouverture (13).

12. Cartouche de filtre (1) selon l'une quelconque des revendications précédentes, dans laquelle les moyens de fermeture (2) comprennent un élément graphique destiné à indiquer visuellement l'emplacement de la zone intentionnellement fracturable (20).
